(19) Europäisches Patentamt
European Patent Office
Office européen des brevets

(11) EP 2 772 495 A1

(12) **EUROPEAN PATENT APPLICATION**

(43) Date of publication:
**03.09.2014 Bulletin 2014/36**

(51) Int Cl.:
***C07F 5/02*** *(2006.01)*

(21) Application number: **13157425.3**

(22) Date of filing: **01.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Lonza Ltd**
**3930 Visp (CH)**

(72) Inventors:
- **Ellinger, Stefan**
**3930 Visp (CH)**
- **Sievert, Katharina**
**18055 Rostock (DE)**
- **Harloff, Jörg**
**18059 Rostock (DE)**
- **Schulz, Axel**
**18059 Rostock (DE)**
- **Rijksen, Christian**
**3930 Visp (CH)**
- **Ott, Lothar**
**3930 Visp (CH)**

(54) **Method for preparation of tricyanidofluoroborates in 2 steps**

(57) The invention discloses a method for the preparation of tricyanidofluoroborate in two steps via tetra alkylammonium and tetra alkylphosphonium tricyanidofluoroborate, starting from tetraalkylammonium or tetra alkylphosphonium tetrafluoroborate and trimethylsilylcyanide in the first step and exchanging the cation in the second step.

EP 2 772 495 A1

## Description

The invention discloses a method for the preparation of tricyanidofluoroborate in two steps via tetra alkylammonium and tetra alkylphosphonium tricyanidofluoroborate, starting from tetraalkylammonium or tetra alkylphosphonium tetrafluoroborate and trimethylsilylcyanide in the first step and exchanging the cation in the second step.

## BACKGROUND OF THE INVENTION

The term "ionic liquid" (IL) is usually used to refer to a salt which is liquid at temperatures below 100°C, in particular at room temperature. Such liquid salts typically comprise organic cations and organic or inorganic anions, and are described inter alia in P. Wasserscheid, W. Keim, Angew. Chem., 2000, 112, 3926-3945.

Ionic liquids have a series of interesting properties: Usually, they are thermally stable, relatively non-flammable and have a low vapour pressure. In addition, they have good solvent properties for numerous organic and inorganic substances. Owing to their ionic structure, ionic liquids also have interesting electrochemical properties, for example electrical conductivity which is often accompanied by a high electrochemical stability. Therefore, there is a fundamental need for ionic liquids having a variety of properties which open up additional opportunities for their use.

An interesting family of ionic liquids contains tetravalent boron anions. Tetrafluoroborate containing ionic liquids were among the first of this new generation of compounds and 1-ethyl-3-methylimidazolium tetrafluoroborate ([EMIm][$BF_4$]) was prepared via metathesis of [EMIm]I with Ag[$BF_4$] in methanol as disclosed by J. S. Wilkes et al., J. Chem. Soc. Chem. Commun. 1990, 965.

E. Bernhardt, Z. Anorg. Allg. Chem. 2003, 629, 677-685, discloses the reaction of M[$BF_4$] (M = Li, K) with $(CH_3)_3SiCN$ (TMSCN). The preparation of Li[$BF(CN)_3$] is disclosed to take 7 days, that of K[$BF(CN)_3$] takes one month. The yield of K[$BF(CN)_3$] was 60%, the product contained 5% K[$BF_2(CN)_2$]. The molar ratio of $[BF_4]^-$ : TMSCN was 1 : 7.8.

In this text,
alkyl means linear, branched, cyclic or cyclo alkyl;
cyclic alkyl or cyclo alkyl are intended to include cyclo and polycyclo, such as bicyclo or tricyclo, aliphatic residues;

| | |
|---|---|
| EMIm | 1-ethyl-3-methylimidazolium; |
| eq. | molar equivalent; |
| halide | F , $Cl^-$, Br or I , preferably $F^-$, $Cl^-$ or $Br^-$ , more preferably $Cl^-$; |
| halogen | F, Cl, Br or I; preferably F, Cl or Br; |
| IL | ionic liquid; |
| "linear" and "n-" | are used synonymously with respect to the respective isomers of alkanes; |
| Oct | octyl; |
| RT | room temperature, it is used synonymously with the expression ambient temperature; |
| TMSCN | $(CH_3)_3SiCN$, trimethylsilylcyanide; |

"wt%", "% by weight" and "weight-%" are used synonymously and mean percent by weight; if not otherwise stated.

There was a need for a process for the preparation of fluorotricyanidoborates, which provides economic access to this class of substances, which for example can be used as ionic liquids or as precursors for the preparation of ionic liquids. The process should have satisfactory yield and purity, and the reaction time should be short.

## SUMMARY OF THE INVENTION

Subject of the invention is a method for the preparation of compound of formula (I)

$$[BF(CN)_3]_n^- \qquad Cat^{n+} \qquad \text{(I)}$$

comprising a step (St1) and a (St2); step (St2) is done after step (St1);
step (St2) comprises a reaction (reac-2), wherein a compound of formula (II)

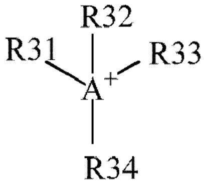 $BF(CN)_3^-$ (II)

is reacted with a compound of formula (I-Cat-n);

$$(Cat^{n+})(AnINORG^{q-})_t \qquad (I\text{-}Cat\text{-}n)$$

compound of formula (II) is prepared in step (St1), step (St1) comprises a reaction (reac-1) between compound of formula (III) and trimethylsilylcyanide;

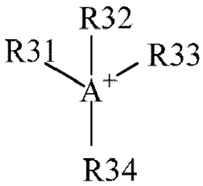 $BF_4^-$ (III)

$Cat^{n+}$ is a cation, which is selected from the group consisting of inorganic cation $CatINORG^{n+}$ and organic cation $CatORG^{n+}$;
n is 1 or 2;
q is 1 or 2;
when n and q are identical, then t is 1;
when n is 2 and q is 1, then t is 2;
when n is 1 and q is 2, then t is 0.5;
$AnINORG^{q-}$ is an anion selected from the group consisting of halide, $OH^-$, $CN^-$, $OCN^-$, $SCN^-$, $N_3^-$, sulfate, hydrogensulfate, nitrate, $CO_3^{2-}$, $HCO_3^-$, $BF_4^-$, $PF_6^-$, $SbF_6^-$, $CF_3SO_3^-$, $(CF_3SO_2)_2N^-$, $(FSO_2)_2N^-$, $C_{1-6}$ alkylsulfonate, $C_{1-6}$ alkylsulfate, dioctylsulfosuccinate, anions of $C_{1-20}$ monocarboxylic aliphatic acids, anions of $C_{2-6}$ dicarboxylic aliphatic acids, benzoate, phthalates, $N(CN)_2^-$, $C(CN)_3^-$, $B(CN)_4^-$, $P(CN)_6^-$,$Sb(CN)_6^-$, and mixtures thereof;
A is N or P;
R31, R32, R33 and R34 are identical or different and independently from each other selected from the group consisting of hydrogen and $C_{1-10}$ alkyl;
$Cat^{n+}$ is different from the cation

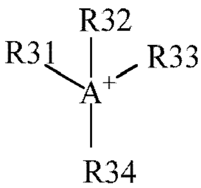

of compound of formula (II).

## DETAILED DESCRIPTION OF THE INVENTION

Preferably, $CatINORG^{n+}$ is selected from the group consisting of Ag+, $Li^+$, $Na^+$, $K^+$, $Rb^+$, $Cs^+$, $NH_4^+$, $Be^{2+}$, $Mg^{2+}$, $Ca^{2+}$, $Sr^{2+}$ and $Ba^{2+}$;
more preferably, $CatINORG^{n+}$ is selected from the group consisting of Ag+, $Li^+$, $Na^+$, $K^+$, $NH_4^+$, $Mg^{2+}$, and $Ca^{2+}$;
even more preferably, $CatINORG^{n+}$ is selected from the group consisting of Ag+, $Li^+$, $Na^+$, $K^+$ and $NH_4^+$;
especially, $CatINORG^{n+}$ is Ag+, $Li^+$, $Na^+$ or $K^+$;
more especially, $CatINORG^{n+}$ is Ag+, $Li^+$ or $K^+$;
even more especially, $CatINORG^{n+}$ is $Li^+$ or $K^+$.

Preferably, $CatORG^{n+}$ contains a heteroatom selected from the group consisting of nitrogen, phosphorus, sulfur

and oxygen;
more preferably, $CatORG^{n+}$ contains a heteroatom selected from the group consisting of nitrogen and phosphorus.
When n is 2, then $CatORG^{n+}$ is preferably $(H_3N\text{-}CH_2\text{-}CH_2\text{-}NH_3)^{2+}$.
Preferably, n in $CatORG^{n+}$ is 1.
When n is 1, then $CatORG^+$ is preferably selected from the group consisting of cation $CatORG\text{-}A^+$, $CatORG\text{-}B^+$, $CatORG\text{-}C^+$, $CatOrg\text{-}D^+$ and $CatORG\text{-}E^+$;
$CatOrg\text{-}A^+$ is $(WR2R3R4R5)^+$,
wherein
W is a nitrogen or phosphorus;

(i) R2, R3, R4 and R5 are identical or different and independently from each other selected from the group consisting of $C_{1-20}$ alkyl, $C_{3-10}$ cycloalkyl and $C_{6-10}$ aryl; or
(ii) R2 and R3 together with W form a 5- to 7-membered saturated or unsaturated ring, R4 and R5 are identical or different and independently from each other selected from the group consisting of $C_{1-20}$ alkyl, $C_{3-10}$ cycloalkyl and $C_{6-10}$ aryl; or
(iii) R2 and R3 together with W and R4 and R5 together with W form, independently from each other, a 5- to 7-membered saturated or unsaturated ring;

$CatOrg\text{-}B^+$ is $(XR6R7R8)^+$,
wherein
X is nitrogen,
R6 and R7 together with X form a 5- to 7-membered unsaturated ring in which X formally has one single bond and one double bond to R6 and R7 respectively,
R8 is selected from the group consisting of $C_{1-20}$ alkyl, $C_{3-10}$ cycloalkyl or $C_{6-10}$ aryl;
$CatOrg\text{-}C^+$ is $(YR9R10R11)^+$,
wherein
Y is sulphur;

(i) R9, R10 and R11 are identical or different and independently from each other selected from the group consisting of $C_{1-20}$ alkyl, $C_{3-10}$ cycloalkyl and $C_{6-10}$ aryl; or
(ii) R9 and R10 together with Y form a 5- to 7-membered saturated or unsaturated ring, R11 is selected from the group consisting of $C_{1-20}$ alkyl, $C_{3-10}$ cycloalkyl and $C_{6-10}$ aryl;

$CatOrg\text{-}D^+$ is $(ZR12R13)^+$,
wherein
Z is oxygen or sulphur;
R12 and R13 together with Z form a 5- to 7-membered ring in which Z formally has one single bond and one double bond to R12 and R13 respectively; $CatORG\text{-}E^+$ is a cyclic $C_{3-9}$ alkane or a cyclic $C_{3-9}$ alkene bearing a positive charge;

in case of cyclo alkene, $CatORG\text{-}E^+$ has 1, 2 or 3 double bonds;
the residues R2, R3, R4, R5, R6, R7, R8, R9, R10, R11, R12 and R13 are, independently from each other, unsubstituted or substituted by 1, 2 or 3 substituents selected from the group consisting of halogen, cyano and $C_{1-4}$ alkoxy;
the rings formed by R2 and R3 together with W, R4 and R5 together with W, R6 and R7 together with X, R9 and R10 together with Y and R12 and R13 together with Z contain no, 1 or 2 further heteroatoms, the heteroatoms being selected from the group consisting of O, N and S; and wherein any further heteroatom N can be substituted by $C_{1-8}$ alkyl.
More preferably, $CatORG^{n+}$ is selected from the group consisting of ammonium, phosphonium, sulfonium, pyrrolidinium, pyrrolinium, pyrrolium, pyrazolium, pyrazolinium, imidazolium, imidazolinium, triazolium, oxazolium, thiazolium, piperidinium, piperazinium, morpholinium, pyridinium, pyridazinium, pyrimidinium, pyrazinium, 1,3-dioxolium, pyrylium and thiopyrylium, quinoxalinium, indolinium, indolium, cyclopropenylium, 1,2,3-triphenylcyclopropenylium, tri-tert-butylcyclopropenylium, 1,2,3-tris(diethylamino)cyclopropenylium, 1,2,3-tris(trimethylsilyl)cyclopropenylium and tropylium, 1,2,3,4,5,6,7-heptaphenylcyclohepta-2,4,6-trien-1-ylium.
Even more preferably, $CatORG^{n+}$ is selected from the group consisting of

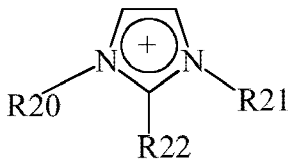, 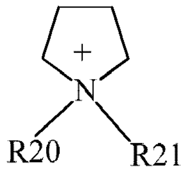, 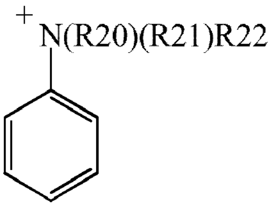, 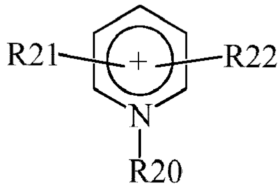,

$[N(R20)(R21)(R22)R23]^+$ and $[P(R20)(R21)(R22)R23]^+$;
wherein
R20 is $C_{1-20}$ alkyl;
R21, R22 and R23 are identical or different and independently selected from the group consisting of H and $C_{1-20}$ alkyl; preferably,
R20 is $C_{1-14}$ alkyl;
R21, R22 and R23 are identical or different and independently selected from the group consisting of H and $C_{1-14}$ alkyl; more preferably,
R20 is $C_{1-8}$ alkyl;
R21, R22 and R23 are identical or different and independently selected from the group consisting of H and $C_{1-8}$ alkyl.

Especially, $CatORG^{n+}$ is selected from the group consisting of

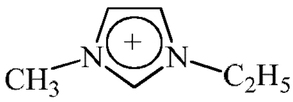,

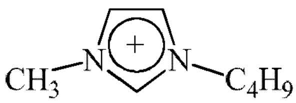, 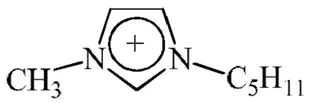, 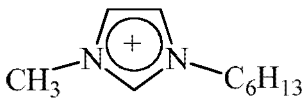,

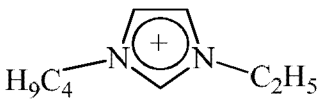, 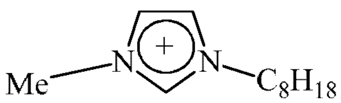, 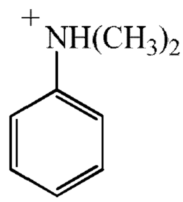, 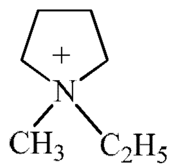,

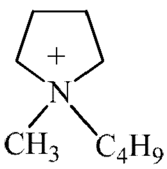, 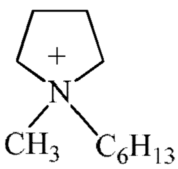, 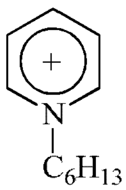, 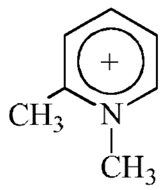, 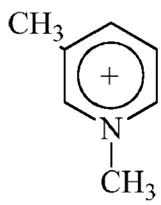, 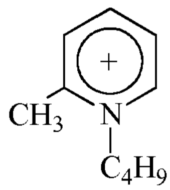,

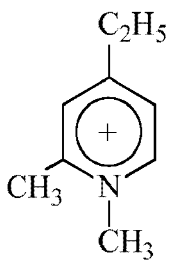, 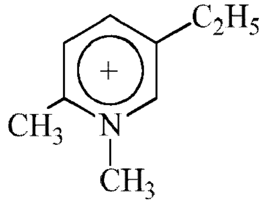,

$[N(C_2H_5)_4]^+$, $[N(C_4H_9)_4]^+$, $[P(C_2H_5)_4]^+$, $[P(C_4H_9)_4]^+$ and $[P(C_6H_{13})_3(C_{14}H_{29})]^+$; more especially, $CatORG^{n+}$ is selected from the group consisting of

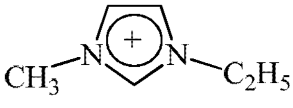,

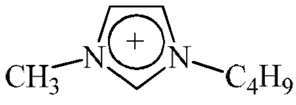, 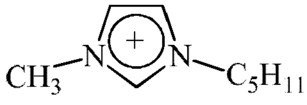, 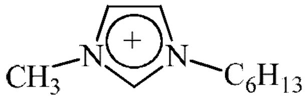,

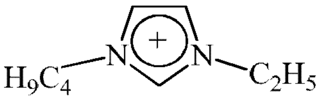, 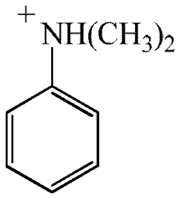, 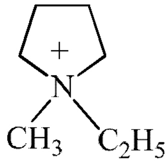, 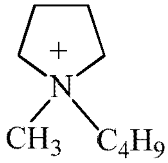, 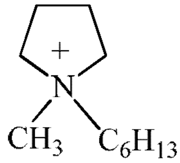,

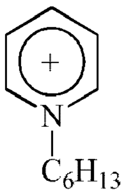, 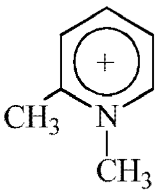, 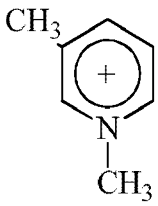, 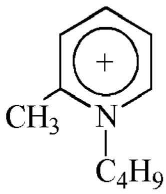, 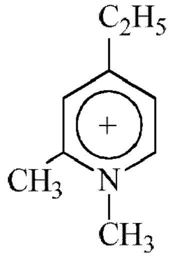, 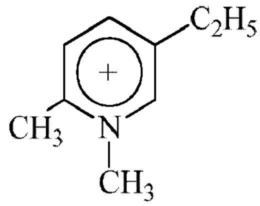,

$[N(C_2H_5)_4]^+$, $[N(C_4H_9)_4]^+$, $[P(C_2H_5)_4]^+$, and $[P(C_4H_9)_4]^+$.

In another more preferable embodiment, $CatORG^{n+}$ is

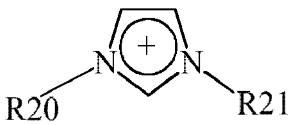;

wherein
R20 is $C_{1-20}$ alkyl;
R21 is H and $C_{1-20}$ alkyl;
preferably,
R20 is $C_{1-14}$ alkyl;
R21 is Hand $C_{1-14}$ alkyl;
more preferably,
R20 is $C_{1-8}$ alkyl;
R21 is H and $C_{1-8}$ alkyl;
even more preferably,
R20 is methyl and R21 is ethyl.

In a particular preferred embodiment, $Cat^{n+}$ is $Ag^+$, $Li^+$, $K^+$ or

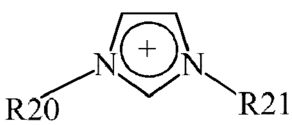

with R20 being methyl and R21 being ethyl.

Preferably, $AnINORG^{q-}$ is an anion selected from the group consisting of halide, $OH^-$, $CN^-$, sulfate, hydrogensulfate, nitrate, $CO_3^{2-}$, $HCO_3^-$, $BF_4^-$, $PF_6^-$, $CF_3SO_3^-$, $(CF_3SO_2)_2N^-$, $(FSO_2)_2N^-$, methyl sulfonate, ethyl sulfonate, methyl

sulfate, ethyl sulfate, acetate, oleate, fumarate, maleate, oxalate, benzoate, $N(CN)_2^-$, and mixtures thereof; more preferably, $AnINORG^{q-}$ is an anion selected from the group consisting of $Cl^-$, $OH^-$, sulfate, hydrogensulfate, nitrate, $CO_3^{2-}$, $HCO_3^-$, acetate, and mixtures thereof.

Preferably, R31 is hydrogen or $C_{1-10}$ alkyl; and R32, R33 and R34 are identical or different and independently from each other selected from the group consisting of $C_{1-10}$ alkyl;
more preferably, R31, R32, R33 and R34 are identical or different and independently from each other selected from the group consisting of $C_{1-10}$ alkyl;
even more preferably, R31, R32, R33 and R34 are identical or different and independently from each other selected from the group consisting of $C_{1-8}$ alkyl;
especially, R31, R32, R33 and R34 are identical or different and independently from each other selected from the group consisting of methyl, ethyl, propyl, butyl or octyl;
more especially, R31, R32, R33 and R34 are identical and are methyl, ethyl, n-butyl or n-octyl, or R31, R32 and R33 are ethyl and R34 is methyl;
even more especially, R31, R32, R33 and R34 are n-butyl.

Preferably, A is N, with R31, R32, R33 and R34 being any of the mentioned embodiments.

Preferably, from 3 to 10 mol equivalents, more preferably from 3.1 to 8 mol equivalents, even more preferably from 3.1 to 7 mol equivalents, especially from 3.1 to 5 mol equivalents, of trimethylsilylcyanide are used in reaction (reac-1), the mol equivalents being based on the mol of compound of formula (III).

Preferably, reaction (reac-1) is done in the absence of a solvent, i.e. no solvent is used.

Preferably, the reaction temperatures of reaction (reac-1) is from 125 to 210°C or 130 to 210°C, more preferably from 125 to 200°C, especially from 125 to 190°C, more especially from 130 to 170°C, even more especially from 135 to 165°C; more especially from 140 to 160°C.

Preferably, the reaction time of reaction (reac-1) is from 30 min to 48 h, more preferably from 1 h to 48 h, even more preferably from 1 h to 24 h, especially from 1 h to 21 h, more especially from 2 h to 18 h; even more especially from 5 h to 18 h, in particular from 8 h to 18 h.

Preferably, reaction (reac-1) is done in a closed system and at the pressure caused by the chosen temperature.

Preferably, reaction (reac-1) is done under inert atmosphere. Preferably, the inert atmosphere is achieved by the use if an inert gas preferably selected from the group consisting of argon, another noble gas, lower boiling alkane, nitrogen and mixtures thereof.

The lower boiling alkane is preferably a $C_{1-3}$ alkane, i.e. methane, ethane or propane.

Reaction (reac-2) is a metathesis reaction, also called a salt-exchange reaction, in which a first cation is replaced by a second cation.

Preferably, a compound of formula (I) with $Cat^{n+}$ being $CatORG^{n+}$ is prepared in step (St2) by the reaction (reac-2), wherein a compound of formula (II) is reacted with a compound of formula (I-Cat-n) with $Cat^{n+}$ in compound of formula (I-Cat-n) being $CatORG^{n+}$.

Preferably, when n is 1, then from 1 to 1.5 mol equivalents, more preferably from 1 to 1.2 mol equivalents, of compound of formula (I-Cat-n) are used in reaction (reac-2), the mol equivalents being based on the mol of compound of formula (II).

Preferably, when n is 2, then from 0.5 to 0.75 mol equivalents, more preferably from 0.5 to 0.6 mol equivalents, of compound of formula (I-Cat-n) are used in reaction (reac-2), the mol equivalents being based on the mol of compound of formula (II).

The reaction temperature of reaction (reac-2) is preferably from 0 to 250 °C, more preferably from 10 to 200 °C, even more preferably from 10 to 150 °C.

The reaction (reac-2) is preferably carried out in a solvent (So12), solvent (So12) is preferably selected from the group consisting of $C_{1-4}$ alkanols, water, DCM, ethyl acetate, $C_{5-10}$ alkane, and mixtures thereof.
$C_{1-4}$ alkanols are preferably selected from the group consisting of MeOH, EtOH, iso-propanol, n-butanol and tert-butanol.
$C_{5-10}$ alkane is preferably pentane, hexane or heptane.
More preferably, reaction (reac-2) is done in water, MeOH, aqueous MeOH or in a biphasic solvent system of water and DCM.

As an alternative, the reaction can also be carried out in the absence of a solvent or in a solvent in which the inorganic salt formed as side product is sparingly soluble or insoluble. As a further alternative, it is also possible to carry out the reaction in an aqueous solution using an ion exchanger loaded with the desired cation $Cat^{n+}$.

The amount of solvent (So12) is preferably from 2 to 40 fold, more preferably from 3 to 20 fold, of the weight of compound of formula (II).

Reaction (reac-2) can be done in a closed system and at the pressure caused by the chosen temperature.

The reaction time of reaction (reac-2) is preferably from 15 min to 48 h, more preferably from 15 min to 24 h, even more preferably from 15 min to 12 h.

Preferably, reaction (reac-2) is done under inert atmosphere. Preferably, the inert atmosphere is achieved by the use if an inert gas preferably selected from the group consisting of argon, another noble gas, lower boiling alkane, nitrogen and mixtures thereof.
The lower boiling alkane is preferably a $C_{1-3}$ alkane, i.e. methane, ethane or propane.
Subsequent to reaction (reac-2) there can be a further metathesis reaction or further metathesis reactions for exchange of a cation.
After reaction (reac-1) and also after reaction (reac-2) the respective reaction products compound of formula (II) and compound of formula (I) can be isolated by standard methods such as filtration, evaporation of volatile components, extraction, washing, drying, concentration, crystallization, chromatography and any combination thereof, which are known per se to the person skilled in the art.
Preferably, the respective reaction product is treated with hydrogen peroxide, preferably with aqueous hydrogen peroxide.
More preferably for isolation, the respective reaction product is mixed with aqueous hydrogen peroxide to provide a mixture (M).
Preferably, the concentration of the hydrogen peroxide is from 10 to 40 wt% hydrogen peroxide, the wt% based on the total weight of the aqueous hydrogen peroxide.
Preferably, from 1 to 10 mol equivalents, more preferably from 1 to 5 mol equivalents, even more preferably from 1 to 3 equivalents, of hydrogen peroxide are used, the mol equivalents being based on the mol of compound of formula (III) or of compound of formula (II) respectively.
Preferably mixture (M) is stirred for 5 min to 12 h, more preferably for 10 min to 6 h, even more preferably for 15 min to 2 h.
Preferably mixture (M) is stirred at a temperature (M), temperature (M) is preferably from ambient temperature to 100°C, more preferably from 40°C to 80°C.
After treatment with hydrogen peroxide, mixture (M) is preferably filtrated. The residue of the filtration is preferably washed with a solvent (WASH), solvent (WASH) is preferably water.
The residue is preferably dissolved with a solvent (DISSOLV) to provide a solution (SOLU), solvent (DISSOLV) is preferably $CH_3CN$, $CH_2Cl_2$, ethyl acetate, $CHCl_3$, MeOH or EtOH.
The amount of solvent (DISSOLV) is preferably from 2 to 40 fold, more preferably from 3 to 20 fold, even more preferably from 5 to 15 fold, of the weight of compound of formula (III) or of compound of formula (II) respectively.
Preferably, solution (SOLU) is treated with charcoal, preferably 1 to 10 times.
The amount of charcoal is preferably 0.1 to 1 fold of the weight of compound of formula (III) or of compound of formula (II) respectively.
In another preferred embodiment, mixture (M) is extracted with a solvent (EXTRACT). Solvent (EXTRACT) is preferably selected from the group consisting of dichloromethane, diethyl ether and chloroform.
Any drying of an organic phase, e.g. the organic phase obtained after extraction with solvent (EXTRACT), is preferably done with $Na_2SO_4$, $K_2CO_3$, $CaCl_2$ or $MgSO_4$.
Any isolation from a solution, e.g. from solution (SOLU), is preferably done by evaporation of the solvent.
Compounds of formula (III) are known compounds and can be prepared according to known methods, e.g. by metathesis reaction starting from $HBF_4$, from $KBF_4$ or from $LiBF_4$.
The method of the invention provides compound of formula (I) in high yield and high purity, the reaction time is significantly shorter and the molar amount of TMSCN with respect to $[BF_4]^-$ compared to prior art.

## Examples

### Methods

$^1H$ and $^{13}C$ NMR spectra were recorded on a Bruker AVANCE 300 (300 MHz) (300 MHz for $^1H$ and 250 MHz for $^{13}C$) instruments in $CD_3CN$. Chemical shifts are expressed in parts per million referred to TMS and coupling constants (J) in Hertz.
IR-spectra were recorded on a Nicolet 380 FT-IR spectrometer. Measurements were done at room temperature.
RAMAN-spectra were recorded on a Kaiser Optical Systems RXN1-785. The intensity was normalized on 10 for the most intensive peak.
The C/H/N-analyses were measured on a C/H/N/S-Analysator (Thermoquest Flash EA 1112).
Melting points were measured on a DSC 823e from Mettler-Toledo. The calibration was carried out with the melting points of In (156.6 $\pm$ 0.3°C) and Zn (419.6 $\pm$ 0.7°C) with an heating rate of 5 K per min.

**Example 1: Synthesis of [(n-Bu)$_4$N] [BF(CN)$_3$]**

[(n-Bu)$_4$N][BF$_4$] (1.17 g, 3.55 mmol), prepared according to example 12, and $(CH_3)_3SiCN$ (1.23 g, 12.44 mmol) were filled under argon atmosphere with a residual oxygen content of below 5 ppm and with a residual water content of below 1 ppm into a teflon tube.
The teflon tube was closed using a teflon lid and place in an autoclave. The autoclave was placed inside a muffle furnace which was heated to 150°C in 30 min. This temperature was held for 13 h.
After cooling to ambient temperature the reaction mixture was mixed with water and aqueous hydrogen peroxide (0.5 ml, 5 mmol, 30 wt%). After stirring at 60°C for an hour the solution was cooled to ambient temperature. The product was extracted with dichloromethane three times. The organic phase was separated and dried with $MgSO_4$ and filtered. The filtrate was evaporated on a rotary evaporator. The yield of the yellow crystalline product was 0.95 g (76%, 2.71 mmol). Only one boron and one fluorine species, the one of the desired product, is visible in $^{11}$B NMR and in the $^{19}$F NMR respectively.

**Analytics**

**Mp:** 60°C

**C/H/N Analysis** calc. % (found): C 65.14 (64.90), H 10.36 (10.15), N 15.99 (15.87)
**$^1$H NMR** (25°C, $CD_3CN$, 300.13 MHz, delta in ppm): 0.97 (t, 12H, $CH_3$, $^3J(^1H-^1H)$ = 7.2 Hz), 1.36 (m, 8H, $CH_3$-$CH_2$, $^3J(^1H-^1H)$ = 7.6 Hz), 1.59 (m, 8H, $CH_2$-$CH_2N$), 3.08 (m, 8H, $NCH_2$)
**$^{13}$C NMR** (25°C, $CD_3CN$, 250.13 MHz, delta in ppm): 13.78 (s, 4C, $CH_3$), 20.30 (m, 4C, $CH_3$-$CH_2$), 24.29 (m, 4C, $CH_2$-$CH_2N$), 59.33 (m, 4C, $NCH_2$), 127.83 (3C, CN)
**$^{11}$B NMR** (25°C, $CD_3CN$, 96.29 MHz, delta in ppm): -17.87 (d, 1B, $BF(CN)_3$, $^1J(^{13}C-^{11}B$ = 44.02 Hz)
**$^{19}$F NMR** (25°C, $CD_3CN$, 300.13 MHz, delta in ppm): -211.73 (q, 1F, $^{l1}J(^{11}B-^{19}F)$ = 44.96 Hz, $^2J(^{10}B-^{19}F)$ = 34.74 Hz)
**IR** (ATR, 32 scans, $\nu$ in cm$^{-1}$): 2964 (m), 2935 (m), 2876 (m), 2214 (w), 1474 (m), 1408(w), 1382 (w), 1361(w), 1350 (w), 1322 (w), 1311 (w), 1285(w), 1244 (w), 1171 (w), 1130 (w), 1110 (w), 1080 (w), 1040 (m), 991 (w), 959 (m), 938 (m), 926 (m), 903 (s), 821 (w), 803 (w), 736 (m), 668 (w), 592 (w), 532 (w)
**RAMAN** (500 mW, 400 scans cm$^{-1}$): 2971 (5), 2941 (7), 2878 (6), 2219 (10), 1452 (3), 1324 (2), 1113 (2), 1062 (1), 910 (1), 883 (1), 594 (1), 264 (1), 224 (1), 130 (2)

**Example 2: Synthesis of [(n-Bu)$_4$N] [BF(CN)$_3$]**

Example 1 was repeated with the differences:

1. [(n-Bu)$_4$N][BF$_4$] (0.340 g, 1.03 mmol) and $(CH_3)_3SiCN$ (0.4 g, 4.0 mmol) were used.
2. The temperature was 140°C instead of 150°C, which was held for 20 h instead of 13 h.

A light yellow crystalline product was obtained (0.276 g, 76%, 0.79 mmol).

**Analytics**

**C/H/N Analysis** calc. % (found): C 65.14 (65.27), H 10.36 (10.17), N 15.99 (15.97)
The NMR and IR data are the same as in example 1.

**Example 3: Synthesis of [(n-Bu)$_4$N] [BF(CN)$_3$]**

Example 1 was repeated with the differences:

1. [(n-Bu)$_4$N][BF$_4$] (1.07 g, 3.24 mmol) and $(CH_3)_3SiCN$ (1.29 g, 13.00 mmol) were used.
2. The temperature was 170°C instead of 150°C, which was held for 10 h instead of 13 h.

A yellow crystalline product was obtained (0.84 g, 74%, 2.40 mmol).

**Analytics**

**C/H/N Analysis** calc. % (found): C 65.14 (65.24), H 10.36 (10.22), N 15.99 (16.28)
The NMR and IR data are the same as in example 1.

**Example 4: Synthesis of $[(n\text{-}Bu)_4N]$ $[BF(CN)_3]$**

Example 1 was repeated with the differences:

1. $[(n\text{-}Bu)_4N][BF_4]$ (0.588 g, 1.79 mmol) and $(CH_3)_3SiCN$ (0.71 g, 7.16 mmol) were used.
2. The temperature was 190°C instead of 150°C, which was held for 5 h instead of 13 h. A yellow crystalline product was obtained (0.39 g, 62%, 1.11 mmol).

**Analytics**

**C/H/N Analysis** calc. % (found): C 65.14 (65.29), H 10.36 (10.30), N 15.99 (15.96)
The NMR and IR data are the same as in example 1.

**Example 5: Synthesis of $[(n\text{-}Bu)_4N]$ $[BF(CN)_3]$**

Example 1 was repeated with the differences:

1. $[(n\text{-}Bu)_4N][BF_4]$ (0.268 g, 0.81 mmol) and $(CH_3)_3SiCN$ (0.29 g, 2.92 mmol) were used.
2. The temperature was 200°C instead of 150°C, which was held for 1 h instead of 13 h. A yellow crystalline product was obtained (0.172 g, 60%, 0.49 mmol).

**Analytics**

**C/H/N Analysis** calc. % (found): C 65.14 (64.55), H 10.36 (10.02), N 15.99 (15.73)
The NMR and IR data are the same as in example 1.

**Example 6: Synthesis of $[Me_4N]$ $[BF(CN)_3]$**

Example 1 was repeated with the differences:

1. $[Me_4N][BF_4]$ (0.422 g, 2.62 mmol), prepared according to example 15, and $(CH_3)_3SiCN$ (1.00 g, 10.08 mmol) were used.
2. After addition of water and aqueous hydrogen peroxide, stirring at 60°C for an hour and cooling to ambient temperature the solution was filtrated. The filtrate was evaporated on a rotary evaporator. The product was dried at 90°C and 0.001 mbar for 10 h. The yield of the white crystalline product was 0.39 g (82%, 2.14 mmol).

**Analytics**

**Mp:** 258°C with starting degradation
**C/H/N Analysis** calc. % (found): C 46.19 (45.90), H 6.65 (6.35) N 30.78 (30.33)
**$^1$H NMR** (25°C, d6-DMSO, 300.13 MHz, delta in ppm): 3.09 (s, 12H, $CH_3$)
**$^{13}$C NMR** (25°C, d6-DMSO, 250.13 MHz, delta in ppm): 54.39 (t, 4C, $CH_3$)
**$^{11}$B NMR** (25°C, d6-DMSO, 96.29 MHz, delta in ppm): -17.90 (d, 1B, $BF(CN)_3$, $^1J(^{13}C\text{-}^{11}B$ = 44.82 Hz)
**$^{19}$F NMR** (25°C, d6-DMSO, 300.13 MHz, delta in ppm): -210.81 (q, 1F, $^1J(^{11}B\text{-}^{19}F)$ = 44.79 Hz)
**IR** (ATR, 32 scans, $\nu$ in $cm^{-1}$): 2964 (m), 2935 (m), 2877 (m), 2214 (w), 1474 (m), 1382(w), 1361(w), 1322 (w), 1286(w), 1244 (w), 1171 (w), 1152 (w), 1130 (w), 1110 (w), 1083 (w), 1042 (m), 991 (w), 959 (m), 938 (m), 926 (m), 903 (s), 803 (w), 737 (m), 592 (w), 532 (w)

**Example 7: Synthesis of $[(n\text{-}Oct)_4N]$ $[BF(CN)_3]$**

Example 1 was repeated with the differences:

1. $[(n\text{-}Oct)_4N][BF_4]$ (0.117 g, 0.21 mmol), prepared according to example 14, and $(CH_3)_3SiCN$ (0.15 g, 1.51 mmol) were used.
2. After evaporation of the filtrate on a rotary evaporator the product was dried at 90°C and ca. 0.001 mbar for 10 h. The yield of the oily orange product was 0.092 g (76 %, 0.16 mmol).

**Analytics**

**Mp: -3°C**

**C/H/N Analysis** calc. % (found): C 73.14 (73.01), H 11.93 (11.23) N 9.75 (9.26)
**$^1$H NMR** (25°C, $CD_3CN$, 300.13 MHz, delta in ppm): 0.90 (t, 12H, $CH_3$), 1.31 (m, 40H, $CH_3$-$(CH_2)_5$), 1.58 (m, 8H, N-$CH_2$-$CH_2$), 3.06 (m, 8H, N-$CH_2$)
**$^{13}$C NMR** (25°C, $CD_3CN$, 250.13 MHz, delta in ppm): 14.44 (s, 4C, $CH_3$), 22.36 (s, 4C, $CH_3$-$CH_2$), 23.41 (s, 4C, N-$(CH_2)_2$-$CH_2$), 26.89 (t, 4C, N-$CH_2$-$CH_2$), 29.64 (s, 4C, N-$(CH_2)_3$-$CH_2$), 29.75 (s, 4C, $CH_3$-$(CH_2)_2$-$CH_2$), 32.49 (s, 4C, $CH_3$-$CH_2$-$CH_2$), 59.48 (t, 4C, N-$CH_2$)
**$^{11}$B NMR** (25°C, $CD_3CN$, 96.29 MHz, delta in ppm): -17.88 (d, 1B, $BF(CN)_3$, $^1J(^{13}C-^{11}B$ = 44.49 Hz)
**$^{19}$F NMR** (25°C, $CD_3CN$, 96.29 MHz, delta in ppm): -211.77 (q, 1F, $^1J(^{11}B-^{19}F)$ = 43.98 Hz)
**IR** (ATR, 32 scans, $\nu$ in $cm^{-1}$): 2954 (m), 2925 (s), 2857 (s), 2212 (w), 1483 (m), 1466 (m), 1378 (w), 1263 (w), 1183 (w), 1047 (m), 937 (m), 901 (s), 815 (w), 764 (w), 723 (w), 591 (w)

**Example 8: Synthesis of [$Et_3$MeN[$BF(CN)_3$]**

Example 1 was repeated with the differences:

1. [$Et_3$MeN][$BF_4$] (0.657 g, 3.24 mmol), prepared according to example 13, and $(CH_3)_3SiCN$ (1.29 g, 13.00 mmol) were used.
2. After addition of water and aqueous hydrogen peroxide, stirring at 60°C for an hour and cooling to ambient temperature the solution was filtrated. The filtrate was evaporated on a rotary evaporator. The product was recrystallized from $CH_3CN$. The product was dried at 90°C and 0.001 mbar for 10 h. The yield of the white crystalline product was 0.385 g (53%, 1.72 mmol).

**Analytics**

**Mp:** 93°C

**C/H/N Analysis** calc. % (found): C 53.60 (53.11), H 8.10 (8.18), N 25.00 (24.66)
**$^1$H NMR** (25°C, $CD_3CN$, 300.13 MHz, delta in ppm): 1.24 (tt, 9H, $CH_3$), 2.87 (s, 3H, $CH_3$), 3.25 (q, 6H, $CH_2$)
**$^{13}$C NMR** (25°C, $CD_3CN$, 300.13 MHz, delta in ppm): 8.11 (s, 3C, $CH_2$-$CH_3$), 47.52 (t, 1C, $CH_3$), 56.89 (t, 3C, $CH_2$)
**$^{11}$B NMR** (25°C, $CD_3CN$, 96.29 MHz, delta in ppm): -17.89(d, 1B, $BF(CN)_3$, $^1J(^{13}C-^{11}B$ = 44.27 Hz)
**$^{19}$F NMR** (25°C, $CD_3CN$, 96.29 MHz, delta in ppm): -211.79 (q, 1F, $^1J(^{11}B-^{19}F)$ = 44.91 Hz) **IR** (ATR, 32 scans, $\nu$ in $cm^{-1}$): 2992 (w), 2955 (w), 2214 (w), 1487 (m), 1459(w), 1397 (m), 1360 (w), 1317 (w), 1207 (w), 1192 (w), 1125 (w), 1046 (s), 1008 (m), 958 (m), 937 (m), 901 (s), 810 (m), 788 (w), 682 (w), 592 (w)

**Example 9: Synthesis of [$(n\text{-}Bu)_4$N] [$BF(CN)_3$]**

Example 1 was repeated with the differences:

1. [$(n\text{-}Bu)_4$N][$BF_4$] (17.957 g, 54.5 mmol) and $(CH_3)_3SiCN$ (21.1 g, 213 mmol) were used.
2. The temperature was 140°C instead of 150°C, which was held for 20 h instead of 13 h. 3.5 ml of the aqueous hydrogen peroxide were used instead of 0.5 ml.

A light yellow crystalline product was obtained (15.847 g, 83%, 45.2 mmol).

**Example 10: Synthesis of EMIm[$BF(CN)_3$]**

[$(n\text{-}Bu)_4$N][$BF(CN)_3$] (15.847 g, 45.2 mmol), prepared according to example 9, were dissolved in 80 ml MeOH. This solution was added to a 10% aqueous solution of (8.066 g, 47.5 mmol) $AgNO_3$ under omission of light. A white precipitate of Ag[$BF(CN)_3$] occurred. After 30 min of stirring the solid was filtered and washed three times with 50 ml of water. The obtained Ag[$BF(CN)_3$] was dissolved in 200 ml of $CH_3CN$. A solution of KBr (5.47 g, 46.0 mmol) in 15 ml water was added. A greenish precipitate of AgBr occurred. After 30 min of stirring the AgBr was filtered off. The filtrate was dried on a rotary evaporator. The obtained solid were diluted in 150 ml water and filtered. The aqueous solution was washed two times with $CH_2Cl_2$.
Then an aqueous solution of EMImBr (7.646 g, 40 mmol) was added to the washed aqueous solution of K[$BF(CN)_3$].

After 30 min of stirring the **EMIm[BF(CN)$_3$]** was extracted with $CH_2Cl_2$ three times. The collected organic phases were dried over anhydrous $Na_2SO_4$ and filtered. After evaporating the solvent and drying the **EMIm[BF(CN)$_3$]** at 100°C in vacuo 7.24 g (33.0 mmol 73%) of EMIm[BF(CN)$_3$] were obtained.

**Analytics**

**Mp:** below -90°C

**C/H/N Analysis** calc.% (found): C 49.35 (49.26), H 5.06 (5.14), N 31.97 (31.83)
**$^1$H NMR** (25°C, $CD_3CN$, 300.13 MHz, delta in ppm): 1.47 (t, 3H, $CH_3$, $^3J(^1H-^1H)$ = 7.2 Hz), 3.83 (s, 3H, $NCH_3$), 4.18 (q, 2H, $CH_2$, $^3J(^1H-^1H)$ = 7.4 Hz), 7.33 (m, 1H, EtNCH), 7.38 (m, 1H, MeNCH), 8.40 (s, 1H, NCHN)
**$^{13}$C NMR** (25 °C, CD3CN, 300.13 MHz, delta in ppm): 15.55 (s, 1C, $NCH_2$-$CH_3$), 36.90 (s, 1C, $NCH_3$), 45.92 (s, 1C, $NCH_2$), 123.06 (s, 1C, EtNCH), 124.72 (s, 1C, MeNCH), 136.62 (br, 1C, NCHN)
**$^{11}$B NMR** (25°C, CD3CN, 96.29 MHz, delta in ppm): -17.88 (d, 1B, $BF(CN)_3$, $^1J(^{13}C-^{11}B$ = 44.03 Hz)
**$^{19}$F NMR** (25 °C, CD3CN, 300.13 MHz, delta in ppm):-211.72 (q, 1F, $^1J(^{11}B-^{19}F)$ = 44.94 Hz)
**Karl-Fischer-Titration** of $H_2O$ content: 93 ppm

**Example 11: Synthesis of [(n-Bu$_4$)P] [BF(CN)$_3$]**

Example 1 was repeated with the differences:

1. [(n-Bu)$_4$P][BF$_4$] (0.773 g, 2.23 mmol), prepared according to example 16, and $(CH_3)_3SiCN$ (1.33 g, 13.4 mmol) were used.
2. The temperature was 160°C instead of 150°C, which was held for 20 h instead of 13 h.

A light yellow crystalline product was obtained (0.649 g, 79%, 1.77 mmol).
**C/H/N Analysis** calc.% (found): C 62.13 (62.24), H 9.88 (9.92), N 11.44 (11.72)
**$^1$H NMR** (25°C, $CD_3CN$, 300.13 MHz, delta in ppm): 0.95 (t, 12H, $CH_3$), 3.83 (s, 16H, $CH_3$), 1.48 (m, 8H, $(CH_2)_2$), 2.06 (m, 8H, $PCH_2$)
**$^{13}$C NMR** (25°C, $CD_3CN$, 250.13 MHz, delta in ppm): 13.54 (s, 4C, $CH_3$), 18.91 (d, 4C, $PCH_2$, $^1J(^{13}C-^{31}P)$ = 48.1 Hz, 23.84 (d, 4C, $CH_2$-$CH_3$, $^3J(^{13}C-^{31}P)$ = 4.5 Hz), 24.48 (d, 4C, $CH_2$, $^2J(^{13}C-^{31}P)$ = 15.6 Hz), 126.65 (q, 3C, CN, $^1J(^{11}B-^{13}C)$ = 74.0 Hz, $^2J(^{19}F-^{13}C)$ = 37.1 Hz)
**$^{11}$B NMR** (25°C, $CD_3CN$, 96.29 MHz, delta in ppm): -17.87 (d, 1B, $BF(CN)_3$, $^1J(^{13}C-^{11}B)$ = 44.0 Hz)
**$^{19}$F NMR** (25°C, CD3CN, 300.13 MHz, delta in ppm): -211.76 (q, 1F, $^1J(^{11}B-^{19}F)$ = 43.8 Hz)
**$^{31}$P NMR** (25°C, CD3CN, 121.50 MHz, delta in ppm): 33.72 (s, 1P)

**Example 12: Synthesis of [(n-Bu$_4$)N][BF$_4$]**

K[BF$_4$] (3.12 g, 24.78 mmol) was dissolved in 15 ml of $H_2O$. [(n-Bu)4N]Br (8.05 g, 24.98 mmol) was dissolved in 25 ml of $CH_2Cl_2$ and added to the aqueous solution of K[BF$_4$]. After stirring for 24 hours at ambient temperature the phases were separated. The organic phase was washed three times with 10 ml of water dried over anhydrous $Mg_2SO_4$ and filtered. The filtrate was concentrated on a rotary evaporator to obtain a white solid. The obtained solid was dried at 90°C in vacuo for 15 hours. The yield of [(n-Bu$_4$)N][BF$_4$] was 7.83 g (96 %, 23.8 mmol).

**Analytics**

**Mp:** 153°C

**C/H/N Analysis** calc. % (found): C 58.36 (58.48), H 11.02 (10.84), N 4.25 (4.13)
**$^1$H NMR** (25°C, $CD_3CN$, 300.13 MHz, delta in ppm): 0.96 (t, 12H, $CH_3$, $^3J(^1H-^1H)$ = 7.3 Hz), 1.35 (m, 8H, $CH_3$-$CH_2$, 1.61 (m, 8H, $CH_2$-$CH_2N$), 3.11 (m, 8H, $NCH_2$)
**$^{13}$C NMR** (25°C, $CD_3CN$, 250.13 MHz, delta in ppm): 14.42 (s, 4C, $CH_3$), 20.94 (m, 4C, $CH_3$-$CH_2$), 24.95 (m, 4C, $CH_2$-$CH_2N$), 59.93 (m, 4C, $NCH_2$)
**$^{11}$B NMR** (25°C, $CD_3CN$, 96.29 MHz, delta in ppm): -1.18 (s, 1B, $BF_4$)
**$^{19}$F NMR** (25°C, $CD_3CN$, 300.13 MHz, delta in ppm): -151.61 (4F, $BF_4$)
**IR** (ATR, 32 scans, $\nu$ in $cm^{-1}$): 2960 (m), 2935 (w), 2875 (w), 1486 (m), 1468 (w), 1382 (w), 1285 (w), 1152 (w), 1093 (m), 1047 (s), 1034 (s), 881 (w), 800 (w), 739 (w)
**RAMAN** (460 mW, 150 scans $cm^{-1}$): 2964 (7), 2933 (10), 2876 (10), 2746 (1), 1453 (4), 1327(2), 1153(1), 1137 (2), 911

(2), 880 (1), 766 (1), 256 (2), 79 (1)

**Example 13: Synthesis of [$Et_3$MeN][$BF_4$]**

K[$BF_4$] (2.02 g, 16.04 mmol) and [$Et_3$MeN]Br (3.14 g, 16.03 mmol) were dissolved in 25 ml of acetone died with molecular sieves. After stirring for 25 hours at ambient temperature the reaction mixture was filtered. The filtrate was concentrated on a rotary evaporator to obtain a white solid. The obtained solid was dried at 90°C in vacuo for 15 hours. The yield of [$Et_3$MeN][$BF_4$] was 2.64 g (87 %, 13.9 mmol).

**Analytics**

**C/H/N Analysis** calc. % (found): C 41.41 (41.37), H 8.94 (9.07), N 6.90 (6.73)
**$^1$H NMR** (25°C, $CD_3CN$, 300.13 MHz, delta in ppm): 1.23 (m, 9H, $CH_3$), 2.88 (s, 3H, $CH_3$), 3.26 (m, 6H, $CH_2$)
**$^{13}$C NMR** (25 °C, $CD_3CN$, 300.13 MHz, delta in ppm): 8.04 (s, 3C, $CH_3$), 47.27 (t, 1C, $CH_3$), 56.56 (t, 3C, $CH_2$)
**$^{11}$B NMR** (25°C, $CD_3CN$, 96.29 MHz, delta in ppm): -1.19 (s, 1B, $BF_4$)
**$^{19}$F NMR** (25°C, $CD_3CN$, 300.13 MHz, delta in ppm): -151.43 (q, 4F, $BF_4$)

**Example 14: Synthesis of [(n-Oct)$_4$N][$BF_4$]**

K[$BF_4$] (0.136 g, 1.08 mmol) was dissolved in 5 ml of $H_2O$. [(n-Oct)$_4$N]Br (0.334 g, 0.61 mmol) was dissolved in 5 ml of $CH_2Cl_2$ and added to the aqueous solution of K[$BF_4$]. After stirring for 24 hours at ambient temperature the phases were separated. The organic phase was washed three times with 5 ml of water dried over anhydrous $Mg_2SO_4$ and filtered. The filtrate was concentrated on a rotary evaporator to obtain a white solid. The obtained solid was dried at 90°C in vacuo for 15 hours. The yield of [(n-Oct)$_4$N][$BF_4$] as a white crystalline product was 0.321 g (95%, 0.58 mmol).

**Analytics**

**$^1$H NMR** (25°C, $CD_3CN$, 300.13 MHz, delta in ppm): 0.89 (t, 12H, $CH_3$), 1.30 (m, 40H, $CH_3$-$(CH_2)_5$), 1.78 (m, 8H, N-$CH_2$-$CH_2$), 3.05 (m, 8H, N-$CH_2$)
**$^{13}$C NMR** (25 °C, $CD_3CN$, 250.13 MHz, delta in ppm): 14.34 (s, 4C, $CH_3$), 22.26 (s, 4C, $CH_3$-$CH_2$), 23.32 (s, 4C, N-$(CH_2)_2$-$CH_2$), 26.80 (t, 4C, N-$CH_2$-$CH_2$), 29.56 (s, 4C, N-$(CH_2)_3$-$CH_2$), 29.66 (s, 4C, $CH_3$-$(CH_2)_2$-$CH_2$), 32.40 (s, 4C, $CH_3$-$CH_2$-$CH_2$), 59.38 (t, 4C, N-$CH_2$)
**$^{11}$B NMR** (25°C, $CD_3CN$, 96.29 MHz, delta in ppm): -1.19 (s, 1B, $BF_4$)

**Example 15: Synthesis of [$Me_4$N] [$BF_4$]**

[$Me_4$N]OH (2.03 g, 22.27 mmol) was dissolved in 10 ml of water. Aqueous $HBF_4$ (1.96 g, 22.53 mmol, 50 wt%) was added dropwise. Immediately a white precipitate occurred. The suspension was filtered. The obtained white solid was washed with 10 ml of water and dried at 90°C in vacuo for 15 hour (3.22 g, 90%, 20.03 mmol).
**C/H/N Analysis** calc. % (found): C 29.85 (29.73), H 7.51 (7.48), N 8.70 (8.54)
**$^1$H NMR** (25°C, d6-DMSO, 300.13 MHz, delta in ppm): 3.08 (s, 12H, $CH_3$)
**$^{13}$C NMR** (25 °C, d6-DMSO, 300.13 MHz, delta in ppm): 54.3 (t, 4C, $CH_3$)
**$^{11}$B NMR** (25°C, d6-DMSO, 96.29 MHz, delta in ppm): -1.24 (s, 1B, $BF_4$)
**$^{19}$F NMR** (25°C, d6-DMSO, 300.13 MHz, delta in ppm): -151.53 (q, 4F, $BF_4$)

**Example 16: Synthesis of [(n-Bu)$_4$P][$BF_4$]**

Example 12 was repeated with the differences:

1. [(n-Bu)$_4$P]Br (3.584 g, 10.56 mmol) and K[$BF_4$] (1.323 g, 10.51 mmol) were used instead of K[$BF_4$] (3.12 g, 24.78 mmol) and [(n-Bu)4N]Br (8.05 g, 24.98 mmol) of example 12.

A white crystalline product was obtained (3.31 g, 91 %, 9.57 mmol).

**Analytics**

**C/H/N Analysis** calc. % (found): C 29.85 (29.73), H 7.51 (7.48), N 8.70 (8.54)
**$^1$H NMR** (25°C, $CD_3CN$, 300.13 MHz, delta in ppm): 0.94 (t, 12H, $CH_3$), 1.46 (m, 16H, $(CH_2)_2$), 2.07 (m, 8H, P-$CH_2$)

**$^{13}C$ NMR** (25 °C, $CD_3CN$, 250.13 MHz, δ in ppm): 13.49 (s, 4C, $CH_3$), 18.92 (d, 4C, $PCH_2$), 23.83 (d, 4C, $CH_2$-$CH_3$), 24.48 (d, 4C, $CH_2$)
**$^{11}B$ NMR** (25°C, $CD_3CN$, 96.29 MHz, delta in ppm): -1.22 (d, 1B, $BF_4$)
**$^{19}F$ NMR** (25°C, $CD_3CN$, 300.13 MHz, delta in ppm): -151.40 (4F, $BF_4$)

**Example 17: Synthesis of [(n-$Bu_4$)P][BF$(CN)_3$]**

Example 1 was repeated with the differences:

1. [(n-Bu)$_4$P][$BF_4$] (0.774 g, 2.24 mmol) and $(CH_3)_3SiCN$ (1.33 g, 13.4 mmol) were used.
2. The temperature was 200°C instead of 150°C, which was held for 20 h instead of 13 h.
A light yellow crystalline product was obtained (0.525 g, 64%, 1.43 mmol).

**Analytics**

**C/H/N Analysis** calc.% (found): C 62.13 (62.04), H 9.88 (9.94), N 11.44 (11.25)
**NMR data** were found to be the same as in Example 11.

**Claims**

**1.** Method for the preparation of compound of formula (I)

$$[BF(CN)_3]_n^- \qquad Cat^{n+} \qquad (I)$$

comprising a step (St1) and a (St2); step (St2) is done after step (St1);
step (St2) comprises a reaction (reac-2), wherein a compound of formula (II)

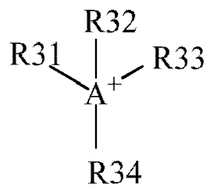

$BF(CN)_3^-$ (II)

is reacted with a compound of formula (I-Cat-n);

$$(Cat^{n+})(AnINORG^{q-})_t \qquad (I\text{-}Cat\text{-}n)$$

compound of formula (II) is prepared in step (St1), step (St1) comprises a reaction (reac-1) between compound of formula (III) and trimethylsilylcyanide;

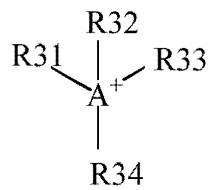

$BF_4^-$ (III)

$Cat^{n+}$ is a cation, which is selected from the group consisting of inorganic cation $CatINORG^{n+}$ and organic cation $CatORG^{n+}$;
n is 1 or 2;
q is 1 or 2;
when n and q are identical, then t is 1;

when n is 2 and q is 1, then t is 2;
when n is 1 and q is 2, then t is 0.5;
$AnINORG^{q-}$ is an anion selected from the group consisting of halide, $OH^-$, $CN^-$, $OCN^-$, $SCN^-$, $N_3^-$, sulfate, hydrogensulfate, nitrate, $CO_3^{2-}$, $HCO_3^-$, $BF_4^-$, $PF_6^-$, $SbF_6^-$, $CF_3SO_3^-$, $(CF_3SO_2)_2N^-$, $(FSO_2)_2N^-$, $C_{1-6}$ alkylsulfonate, $C_{1-6}$ alkylsulfate, dioctylsulfosuccinate, anions of $C_{1-20}$ monocarboxylic aliphatic acids, anions of $C_{2-6}$ dicarboxylic aliphatic acids, benzoate, phthalates, $N(CN)_2^-$, $C(CN)_3^-$, $B(CN)_4^-$, $P(CN)_6^-$,$Sb(CN)_6^-$, and mixtures thereof;
A is N or P;
R31, R32, R33 and R34 are identical or different and independently from each other selected from the group consisting of hydrogen and $C_{1-10}$ alkyl;
$Cat^{n+}$ is different from the cation

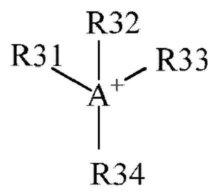

of compound of formula (II).

**2.** Method according to claim 1, wherein
$CatINORG^{n+}$ is selected from the group consisting of Ag+, $Li^+$, $Na^+$, $K^+$, $Rb^+$, $Cs^+$, $NH_4^+$, $Be^{2+}$, $Mg^{2+}$, $Ca^{2+}$, $Sr^{2+}$ and $Ba^{2+}$.

**3.** Method according to claim 1, wherein
$CatORG^{n+}$ contains a heteroatom selected from the group consisting of nitrogen, phosphorus, sulfur and oxygen.

**4.** Method according to claim 1 or 3, wherein
when n is 2, then $CatORG^{n+}$ is $(H_3N-CH_2-CH_2-NH_3)^{2+}$.

**5.** Method according to claim 1 or 3, wherein
when n is 1, then $CatORG^+$ is selected from the group consisting of cation $CatORG-A^+$, $CatORG-B^+$, $CatORG-C^+$, $CatOrg-D^+$ and $CatORG-E^+$;
$CatOrg-A^+$ is $(WR2R3R4R5)^+$,
wherein
W is a nitrogen or phosphorus;

(i) R2, R3, R4 and R5 are identical or different and independently from each other selected from the group consisting of $C_{1-20}$ alkyl, $C_{3-10}$ cycloalkyl and $C_{6-10}$ aryl; or
(ii) R2 and R3 together with W form a 5- to 7-membered saturated or unsaturated ring, R4 and R5 are identical or different and independently from each other selected from the group consisting of $C_{1-20}$ alkyl, $C_{3-10}$ cycloalkyl and $C_{6-10}$ aryl; or
(iii) R2 and R3 together with W and R4 and R5 together with W form, independently from each other, a 5- to 7-membered saturated or unsaturated ring;

$CatOrg-B^+$ is $(XR6R7R8)^+$,
wherein
X is nitrogen,
R6 and R7 together with X form a 5- to 7-membered unsaturated ring in which X formally has one single bond and one double bond to R6 and R7 respectively,
R8 is selected from the group consisting of $C_{1-20}$ alkyl, $C_{3-10}$ cycloalkyl or $C_{6-10}$ aryl;
$CatOrg-C^+$ is $(YR9R10R11)^+$,
wherein
Y is sulphur;

(i) R9, R10 and R11 are identical or different and independently from each other selected from the group consisting of $C_{1-20}$ alkyl, $C_{3-10}$ cycloalkyl and $C_{6-10}$ aryl; or

(ii) R9 and R10 together with Y form a 5- to 7-membered saturated or unsaturated ring, R11 is selected from the group consisting of $C_{1-20}$ alkyl, $C_{3-10}$ cycloalkyl and $C_{6-10}$ aryl;

CatOrg-$D^+$ is $(ZR12R13)^+$,
wherein
Z is oxygen or sulphur;
R12 and R13 together with Z form a 5- to 7-membered ring in which Z formally has one single bond and one double bond to R12 and R13 respectively;
CatORG-$E^+$ is a cyclic $C_{3-9}$ alkane or a cyclic $C_{3-9}$ alkene bearing a positive charge;
in case of cyclo alkene, CatORG-$E^+$ has 1, 2 or 3 double bonds;
the residues R2, R3, R4, R5, R6, R7, R8, R9, R10, R11, R12 and R13 are, independently from each other, unsubstituted or substituted by 1, 2 or 3 substituents selected from the group consisting of halogen, cyano and $C_{1-4}$ alkoxy;
the rings formed by R2 and R3 together with W, R4 and R5 together with W, R6 and R7 together with X, R9 and R10 together with Y and R12 and R13 together with Z contain no, 1 or 2 further heteroatoms, the heteroatoms being selected from the group consisting of O, N and S; and wherein any further heteroatom N can be substituted by $C_{1-8}$ alkyl.

**6.** Method according to claim 1 or 3, wherein
$CatORG^{n+}$ is selected from the group consisting of ammonium, phosphonium, sulfonium, pyrrolidinium, pyrrolinium, pyrrolium, pyrazolium, pyrazolinium, imidazolium, imidazolinium, triazolium, oxazolium, thiazolium, piperidinium, piperazinium, morpholinium, pyridinium, pyridazinium, pyrimidinium, pyrazinium, 1,3-dioxolium, pyrylium and thiopyrylium, quinoxalinium, indolinium, indolium, cyclopropenylium, 1,2,3-triphenylcyclopropenylium, tri-tert-butylcyclopropenylium, 1,2,3-tris(diethylamino)cyclopropenylium, 1,2,3-tris(trimethylsilyl)cyclopropenylium and tropylium, 1,2,3,4,5,6,7-heptaphenylcyclohepta-2,4,6-trien-1-ylium.

**7.** Method according to one or more of claims 1, 3 and 5, wherein $CatORG^{n+}$ is selected from the group consisting of

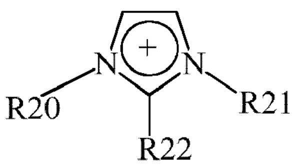
,
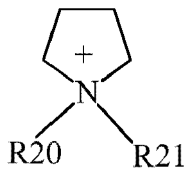
,

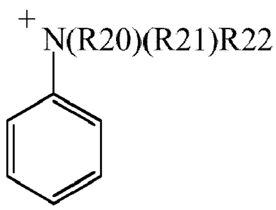
,
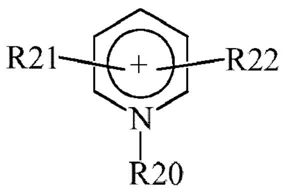
,

$[N(R20)(R21)(R22)R23]^+$ and $[P(R20)(R21)(R22)R23]^+$; wherein
R20 is $C_{1-20}$ alkyl;
R21, R22 and R23 are identical or different and independently selected from the group consisting of H and $C_{1-20}$ alkyl.

**8.** Method according to one or more of claims 1 to 7, wherein
$AnINORG^{q-}$ is an anion selected from the group consisting of halide, $OH^-$, $CN^-$, sulfate, hydrogensulfate, nitrate, $CO_3^{2-}$, $HCO_3^-$, $BF_4^-$, $PF_6^-$, $CF_3SO_3^-$, $(CF_3SO_2)_2N^-$, $(FSO_2)_2N^-$, methyl sulfonate, ethyl sulfonate, methyl sulfate, ethyl sulfate, acetate, oleate, fumarate, maleate, oxalate, benzoate, $N(CN)_2^-$, and mixtures thereof.

**9.** Method according to one or more of claims 1 to 8, wherein
R31 is hydrogen or $C_{1-10}$ alkyl; and
R32, R33 and R34 are identical or different and independently from each other selected from the group consisting of $C_{1-10}$ alkyl.

**10.** Method according to one or more of claims 1 to 9, wherein

R31, R32, R33 and R34 are identical or different and independently from each other selected from the group consisting of $C_{1-10}$ alkyl.

**11.** Method according to one or more of claims 1 to 10, wherein
A is N.

**12.** Method according to one or more of claims 1 to 11, wherein
from 3 to 10 mol equivalents of trimethylsilylcyanide are used in reaction (reac-1), the mol equivalents being based on the mol of compound of formula (III).

**13.** Method according to one or more of claims 1 to 12, wherein
reaction (reac-1) is done in the absence of a solvent.

**14.** Method according to one or more of claims 1 to 13, wherein
the reaction temperatures of reaction (reac-1) is from 125 to 210°C.

**15.** Method according to one or more of claims 1 to 14, wherein
the reaction time of reaction (reac-1) is from 30 min to 48 h.

**16.** Method according to one or more of claims 1 to 3 and 5 to 15, wherein
when n is 1, then from 1 to 1.5 mol equivalents of compound of formula (I-Cat-n) are used in reaction (reac-2), the mol equivalents being based on the mol of compound of formula (II).

**17.** Method according to one or more of claims 1 to 4 and 8 to 15, wherein
when n is 2, then from 0.5 to 0.75 mol equivalents of compound of formula (I-Cat-n) are used in reaction (reac-2), the mol equivalents being based on the mol of compound of formula (II).

**18.** Method according to one or more of claims 1 to 17, wherein
the reaction temperature of reaction (reac-2) is preferably from 0 to 250 °C.

**19.** Method according to one or more of claims 1 to 18, wherein
the reaction (reac-2) is carried out in a solvent (So12), solvent (So12) is selected from the group consisting of $C_{1-4}$ alkanols, water, DCM, ethyl acetate, $C_{5-10}$ alkane, and mixtures thereof.

**20.** Method according to one or more of claims 1 to 19, wherein
the reaction time of reaction (reac-2) is from 15 min to 48 h.

Europäisches Patentamt
European Patent Office
Office européen des brevets

# EUROPEAN SEARCH REPORT

Application Number
EP 13 15 7425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | E. BERNHARDT: Z. ANORG. ALLG. CHEM., vol. 629, 2003, pages 677-685, XP002699380, * the whole document * ----- | 1-20 | INV. C07F5/02 |
| A | WO 2004/072089 A1 (MERCK PATENT GMBH [DE]; WELZ-BIERMANN URS [DE]; IGNATYEV NIKOLAI [DE];) 26 August 2004 (2004-08-26) * the whole document * ----- | 1-20 | |

TECHNICAL FIELDS SEARCHED (IPC)
C07F

The present search report has been drawn up for all claims

1

| Place of search | Date of completion of the search | Examiner |
|---|---|---|
| The Hague | 24 June 2013 | Diederen, Jeroen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 15 7425

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2013

| Patent document cited in search report | Publication date | Patent family member(s) | Publication date |
|---|---|---|---|
| WO 2004072089 A1 | 26-08-2004 | AT 340799 T | 15-10-2006 |
| | | AT 368044 T | 15-08-2007 |
| | | AT 368045 T | 15-08-2007 |
| | | CA 2515856 A1 | 26-08-2004 |
| | | CA 2771069 A1 | 26-08-2004 |
| | | CN 1751053 A | 22-03-2006 |
| | | CN 101108759 A | 23-01-2008 |
| | | CN 101108861 A | 23-01-2008 |
| | | DE 10306617 A1 | 26-08-2004 |
| | | EP 1592696 A1 | 09-11-2005 |
| | | EP 1726593 A1 | 29-11-2006 |
| | | EP 1726594 A1 | 29-11-2006 |
| | | ES 2271837 T3 | 16-04-2007 |
| | | JP 4718438 B2 | 06-07-2011 |
| | | JP 2006517546 A | 27-07-2006 |
| | | KR 20050100685 A | 19-10-2005 |
| | | KR 20100130645 A | 13-12-2010 |
| | | KR 20110110873 A | 07-10-2011 |
| | | KR 20120081640 A | 19-07-2012 |
| | | RU 2337912 C2 | 10-11-2008 |
| | | US 2006222584 A1 | 05-10-2006 |
| | | WO 2004072089 A1 | 26-08-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **P. WASSERSCHEID ; W. KEIM.** *Angew. Chem.,* 2000, vol. 112, 3926-3945
- **J. S. WILKES et al.** *J. Chem. Soc. Chem. Commun.,* 1990, 965
- **E. BERNHARDT.** *Z. Anorg. Allg. Chem.,* 2003, vol. 629, 677-685